# EUROPEAN PATENT APPLICATION

(11) **EP 2 402 935 A2**
(43) Date of publication of application: **04.01.2012**
(21) Application number: 11150329.8
(22) Date of filing: 06.01.2011
(51) Int. Cl.: G09G 5/36

(54) **Computer system and control method thereof**

(30) Priority: 01.07.2010 KR 20100063546
(71) Applicant: Samsung Electronics Co., Ltd., Suwon-si, Gyeonggi-do (KR)
(72) Inventor: Lee, Kyung-hee, Gyeonggi-do (KR)
(74) Representative: Bruce, Alexander Richard Henry

(57) **Abstract**

Disclosed are a computer system and a control method thereof. The computer system can include a graphic unit (100) to generate and output an image signal, a connector (110) to which a display (120) to display an image based on the image signal is connected, a user input unit (140) to receive an input, and a controller (150) to identify the display, determine whether to adjust a resolution of the image, change the resolution of the image for resolution adjustment of the image to be displayed, and control the graphic unit to display the image based on the resolution of the image selected by the user. With this configuration, a user can easily adjust an image resolution.

## Description

The present invention relates to a computer system and a control method thereof, and more particularly, to a computer system to adjust a resolution of an image, and a control method thereof.

With recent upgrade of a resolution of television (TV) products to a high definition (HD) class, the TV products are supporting a function of displaying various images through different image sources connected thereto as well as typical TV functions. In some cases, however, when an image produced in a computer is displayed on a TV connected to the computer, the image may be over-scanned or under-scanned due to a difference in display format between the TV and the computer. To overcome this problem, a user has to look for a graphic attribute or associated menu and set the image to be displayed in accordance with a display format of the TV using the graphic attribute or associated menu. This work requires direct settings by the user and an advanced menu may contain contents difficult to be operated by the user, causing user's inconvenience.

Accordingly, one or more exemplary embodiments of the present invention provide a computer system to adjust a resolution of an image to be displayed, and a control method thereof.

Additional features and utilities of the present invention will be set forth in part in the description which follows and, in part, will be obvious from the description, or may be learned by practice of the present invention.

Exemplary embodiments of the present invention may provide a computer system including a graphic unit to generate and output an image signal, a connector to which a display to display an image based on the image signal is connected, a user input unit to receive an input from a user, and a controller to identify the display, determine whether to adjust a resolution of the image, change the resolution of the image for resolution adjustment of the image to be displayed, and control the graphic unit to display the image based on the resolution of the image selected according to the input receive by the user input unit.

The controller may successively change at least one of a horizontal resolution and a vertical resolution of the image at a predetermined interval.

The controller may independently change the horizontal resolution and the vertical resolution of the image to be displayed, and adjust at least one of the horizontal resolution and the vertical resolution.

The controller may simultaneously change the horizontal resolution and the vertical resolution of the image to be displayed.

The controller may receive display-related identification information from the display and identify the display based on the identification information.

The computer system may further include a storage to store the identification information, and the controller may store the selected resolution of the image in the storage in association with the identification information.

The identification information may include EDID data.

The controller may identify the display based on at least one of resolution, clock, and image size of the display.

Exemplary embodiments of the present invention may also provide a control method of a computer system, including identifying a display which displays an image and determining whether to adjust a resolution of the image, changing the resolution of the image for resolution adjustment of the image to be displayed, receiving an input to select the resolution of the image, and displaying the image based on the resolution of the image selected by the user.

The changing may include successively changing at least one of a horizontal resolution and a vertical resolution of the image at a predetermined interval.

The changing may include independently changing the horizontal resolution and the vertical resolution of the image to be displayed, and one of the horizontal resolution and the vertical resolution may be adjusted, and then the other may be adjusted.

The changing may include simultaneously changing the horizontal resolution and the vertical resolution of the image to be displayed.

The determining may include receiving display-related identification information from the display and identifying the display based on the identification information.

The displaying the image based on the resolution of the image selected by the user may include storing the selected resolution of the image in the storage in association with the identification information.

The determining may include identifying the display based on at least one of resolution, clock, and image size of the display.

Exemplary embodiments of the present invention also provide a method of displaying an image on a display that is communicatively coupled to a computer system, the method including determining whether to adjust the resolution of the display with a controller of the computer system, changing the resolution of the image and displaying the changed resolution image on the display at least once, and receiving an input to select the changed resolution image as a set resolution to display images on the display.

The changing the resolution of the image can include changing at least one of the horizontal resolution and the vertical resolution.

The method may include where at least two images are displayed on the display having different horizontal resolutions or different vertical resolutions.

The method may include changing the resolution and the displaying of the changed resolution on the display are at predetermined time intervals.

The method may further include identifying the display that is communicatively coupled to the computer system, and storing the set resolution in a storage unit with information of the identified display.

Exemplary embodiments of the present invention may also include a computer system having a graphic unit to generate and output an image signal, a communication interface to communicatively couple a display to display an image based on the image signal, a user input unit to receive an input, and a controller to determine whether to adjust the resolution of the display with the controller of the computer system, change the resolution of the image and display the changed resolution image on the display at least once, and receive an input to select the changed resolution image as a set resolution to display images on the display.

In the exemplary embodiments of the present invention as disclosed herein, a user can conveniently select an image resolution suitable for a display when watching an image displaying without direct setting to adjust the image resolution.

In exemplary embodiments of the present invention, a determination can be made whether to adjust an image resolution and the image resolution can be adjusted based on the determination, thereby minimizing and/or preventing unnecessary operation.

The above and/or other features and utilities of the present invention will become apparent and more readily appreciated from the following description of the exemplary embodiments, taken in conjunction with the accompanying drawings, in which:
FIG. 1 is a view illustrating a computer system according to exemplary embodiments of the present invention;
FIG. 2 is a view illustrating an operation of the computer system of FIG. 1 according to exemplary embodiments of the present invention;
FIG. 3 is a view illustrating an operation of a computer system according to exemplary embodiments of the present invention;
FIG. 4 is a view illustrating an operation of a computer system according to exemplary embodiments of the present invention; and
FIG. 5 is a flow chart illustrating the operation of a computer system according to exemplary embodiment of the present invention.

Reference will now be made in detail to the exemplary embodiments of the present invention, examples of which are illustrated in the accompanying drawings, wherein like reference numerals refer to the like elements throughout. The embodiments are described below in order to explain the present invention by referring to the figures.

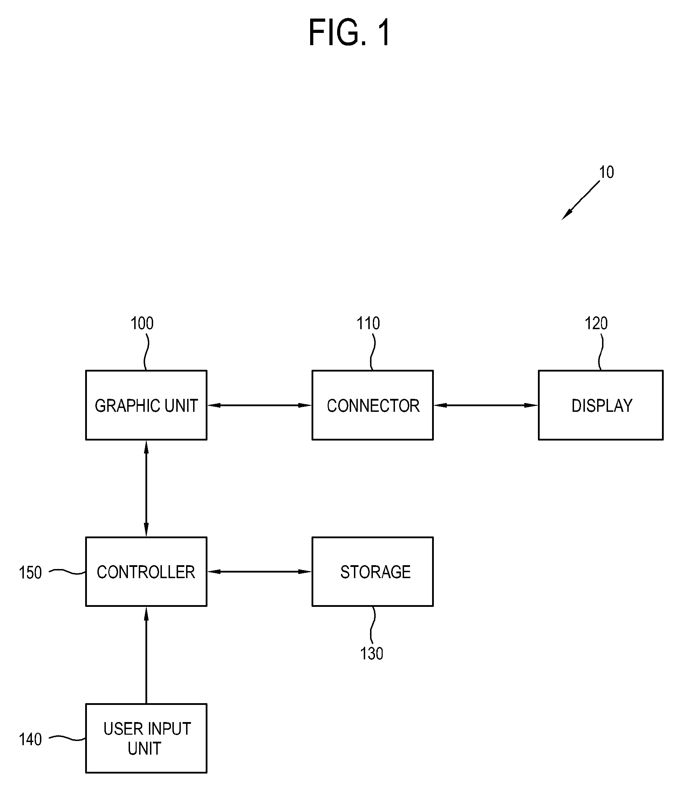

FIG. 1 is a view illustrating a configuration of a computer system 10 according to exemplary embodiments of the present invention.

As illustrated in FIG. 1, the computer system 10 according to exemplary embodiments of the present invention may include a graphic unit 100, a connector 110, a user input unit 140 and a controller 150. The computer system 10 may include a storage 130.

The graphic unit 100 can generate and output an image signal (e.g., to display 120 illustrated in FIG. 1) and may include a video graphics adapter (VGA) card or an integrated card. The graphic unit 100 may include a scaler (not illustrated), which may adjust a size of an image based on the generated image signal when the image is to be displayed on a display 120, so that the displayed image may not be over-scanned or under-scanned on a screen of the display 120.

The display 120 can be connected to the connector 110. The image signal generated by the graphic unit 100 can be transmitted to the display 120 via the connector 110. The connector 110 may include digital visual/video interface (DVI) ports or high-definition multimedia interface (HDMI) ports, and/or any suitable ports to receive and transmit the image signal generated by the graphic unit 100 to the display 120. In exemplary embodiments of the present invention, the connector 110 may be a wired and/or wireless communications interface.

The user input unit 140 can receive input from a user. The user input unit 140 may include a keyboard, a mouse, a touch pad and the like.

The storage 130 can store identification information of the display 120 connected to the connector 110, and a selected resolution of the display 120. The identification information of the display 120 that is stored on the storage 130 can include the model name, model number, manufacturer name, and/or serial number of the display 120. The storage 130 may be a hard disk drive (HDD), solid state drive, a memory device, and/or any suitable digital storage device to carry out the exemplary embodiments of the present invention.

When the display 120 is connected to the connector 110, the controller 150 can identify the display 120 and determine whether or not to adjust a resolution of an image. Examples of the display 120 may be a monitor, a television (TV) or the like that may be a cathode ray tube display, liquid crystal display, a light emitting diode (LED) display, and organic light emitting diode (OLED) display, a plasma display, a digital micromirror display, and/or any suitable display to carry out the exemplary embodiments of the present invention disclosed herein. When the display 120 is a monitor, the monitor may include a resolution adjustment function to adjust the resolution of an image to be displayed according to the input signal received, so that the computer system 10 does not have to adjust a resolution separately. When the display 120 is a TV, the TV may not provide a resolution adjustment function, and the computer system 10 may provide the TV with an image signal including resolution information to indicate a resolution for the TV. The controller 150 can determine whether the display 120 is a monitor or a TV, and, when it is determined that the display 120 is the monitor, the controller 150 may not perform the resolution adjustment function. When it is determined that the display 120 is the TV, the controller 150 can perform the resolution adjustment function.

The controller 150 may be a processor, field programmable gate array, programmable logic device, and/or any suitable controller to carry out the exemplary embodiments of the present invention. The controller 150 may identify the display 120 based on extended display identification data (EDID) of the display 120. EDID may include display-related information such as information on a manufacturer, date of manufacture, serial number, resolution, clock, image size and the like. By using the EDID, the controller 150 may identify the display 120 based on at least one of the resolution, the clock, and the image size.

When it is determined that a TV is connected to the connector 110, the controller 150 can change and/or adjust an image resolution and can transmit the adjusted image resolution from the graphic unit 100 to the display 120. In exemplary embodiments of the present invention, the image resolution can be adjusted by changing an image size. Specifically, an image having a small size can be displayed, and an image having an increasing size can be displayed, or an image having a predetermined large size can be first displayed and an image having a decreased size (e.g., a decreased size from the predetermined large size) can be displayed. A user may select an appropriate image with the user input unit 140 from a plurality of images displayed on a screen of the display 120. The controller 150 can control the display of an image having a changed resolution and a user selection window to be displayed on the display 120 (e.g., both the image with the changed resolution and the user selection window can be displayed on the display 120 at once).

When the user selects a particular image resolution from among one or more image resolutions presented (e.g., on the display 120), the controller 150 can store the selected image resolution in the storage 130 such that it is associated with the identification information of the display connected to the connector 110. Accordingly, when the same display 120 is connected to the connector 110, the controller 150 can transmit an image signal based on the stored resolution without performing a resolution adjustment function. An image resolution adjusting process that may be performed by the controller 150 will be described below.

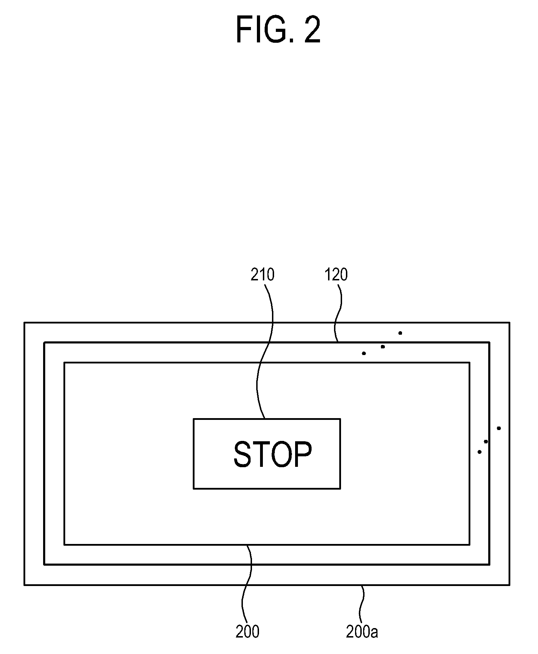

FIG. 2 is a view illustrating an operation of the computer system 10 according to exemplary embodiments of the present invention.

Referring to FIG. 2, the controller 150 can control a horizontal size and a vertical size of an image to be changed and displayed (e.g., changed and displayed at once). One or both of images 200 and 200a may have a changed resolution (e.g., a resolution that is changed by the controller 150), and may be successively changed and displayed at a predetermined interval. FIG. 2 illustrates a user selection window 210 indicated by "STOP." As the images 200 and 220a having the changed resolution can be displayed for a predetermined period of time, when a user selects with the user input unit 140 (e.g., clicks on) the user selection window 210 to select an image for a screen when watching the images being displayed on the screen of the display 120, the resolution of the images 200 and 200a displayed on the current screen is selected and the images having the selected resolution are thereafter displayed. In exemplary embodiments of the present invention, the predetermined small-sized image 200 and the predetermined large-sized image 200a are merely example images, and images having different sizes may be displayed with the two images 200 and 200a.

In exemplary embodiments of the present invention, the images 200 and 200a having the changed resolution may be non-successively displayed. Specifically, after one of the images 200 and 200a is displayed, if the user selects with the user input unit 140 (e.g., clicks on) "YES" in the user selection window 210 where "YES" and "NO" can be displayed (e.g., in the same user selection window 210 where "STOP" is displayed as illustrated in FIG. 2), the resolution of the images 200 and 200a displayed on the current screen can be selected. When the user selects with the user input unit 140 (e.g., clicks on) "NO," the images 200 and 200a having a different resolution may be displayed.

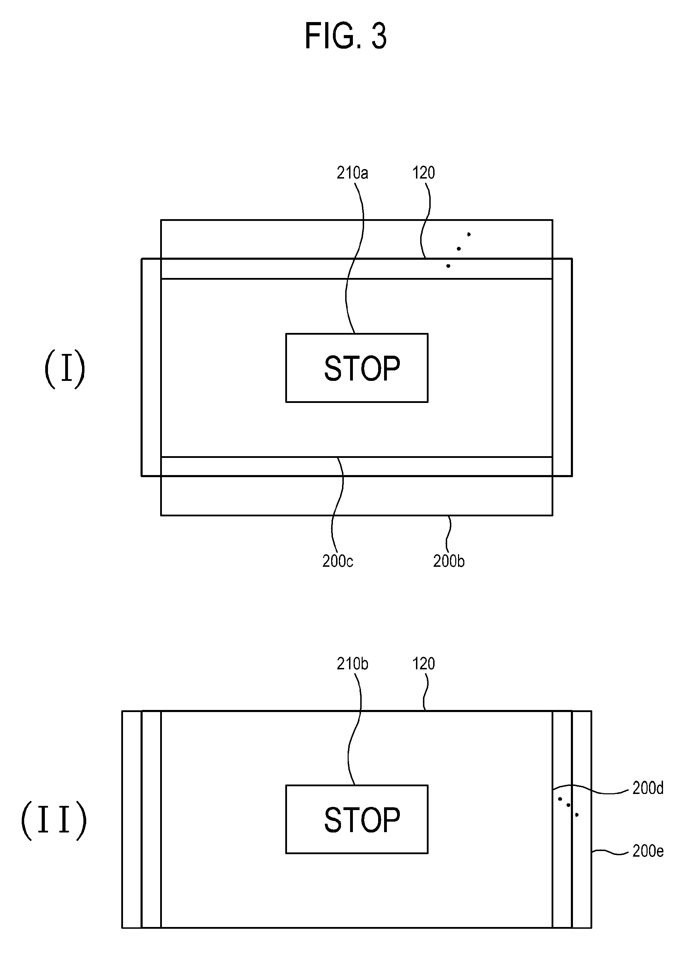

FIG. 3 is a view illustrating an operation of a computer system 10 according to exemplary embodiments of the present invention.

Referring to FIG. 3, a horizontal size and a vertical size of images can be changed and their respective resolutions may be adjusted independently (e.g., adjusted by the controller 150 using resolution information stored in the storage unit 130). The horizontal size and the vertical size may be not only successively but also non-successively changed and displayed at a predetermined interval. A difference between the successive change and the non-successive change has been described earlier and, therefore, for the purpose of brevity, only the successive change will be described below.

FIG. 3(I) illustrates adjustment of a vertical size of an image, where an image 200c having a small vertical size can be displayed with a horizontal size kept constant, and an image 200b having an increasing vertical size can be displayed. If a user selects with the user input unit 140 (e.g., clicks on) "STOP" 210a when an image is being displayed on a screen of the display 120, a vertical size of the image displayed on the current screen of the display 120 is selected.

When the vertical size is selected, an image 200d having a predetermined small horizontal size can be displayed with the vertical size fixed for selection of the horizontal size, as illustrated in FIG. 3(II), and thereafter an image 200e having an increasing horizontal size can be displayed. If the user selects with the user input unit 140 (e.g. clicks on) "STOP" 210b when an image is displayed on the display 120, a horizontal size of the image is selected.

In exemplary embodiments of the present invention, the vertical and horizontal small-sized images 200c and 200d and the vertical and horizontal large-sized image 200b and 200e are merely one example of displayed images. Images having different sizes may be further displayed with the two images 200c and 200d and the two images 200b and 200e, respectively.

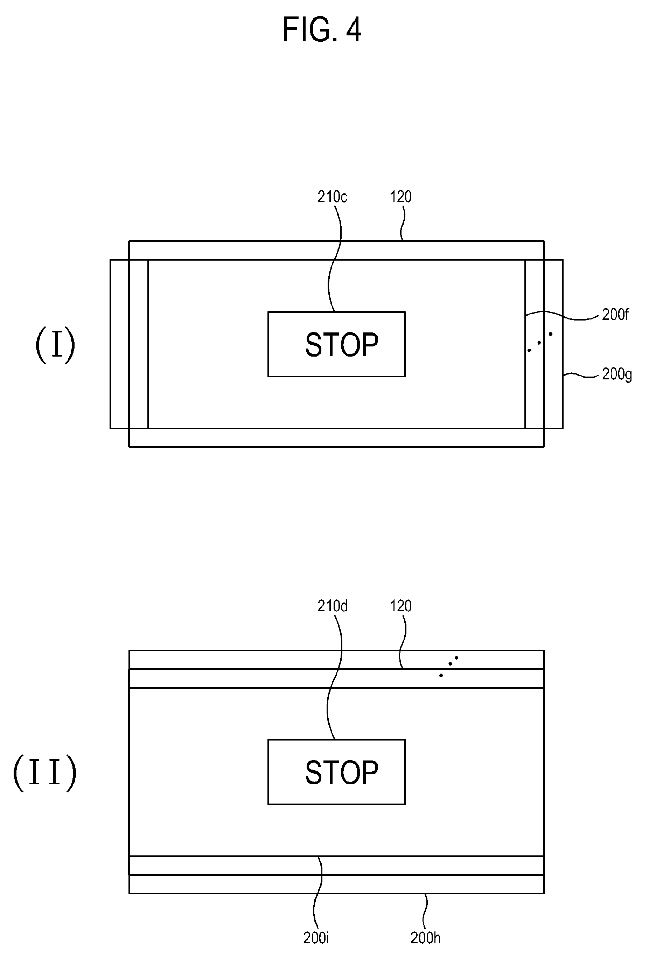

FIG. 4 is a view illustrating an operation of the computer system 10 according to exemplary embodiments of the present invention.

FIG. 4 illustrates a case where a horizontal size of an image is first adjusted and a vertical size of the image is then adjusted.

FIG. 4(I) illustrates adjustment of a horizontal size of an image, where an image 200f having a predetermined small horizontal size is displayed with a vertical size kept constant, and thereafter an image 200g having an increasing horizontal size is displayed. When a user selects with the user input unit 140 (e.g., clicks on) "STOP" 210c when an image is being displayed on a screen, a horizontal size of the image displayed on the current screen of display 120 is selected.

When the horizontal size of the image is selected, an image 200i having a predetermined small vertical size is displayed with the horizontal size fixed for selection of the vertical size, as illustrated in FIG. 4(II), and thereafter an image 200h having an increasing vertical size is displayed. If the user selects with the user inut unit 140 (e.g., clicks on) "STOP" 210d when an image is displayed, a vertical size of the image can be selected.

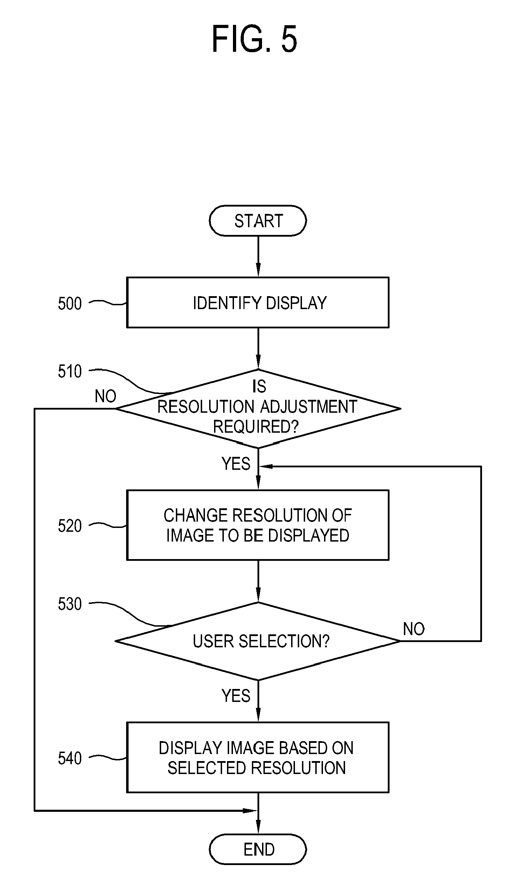

FIG. 5 is a flow chart illustrating the operation of the computer system 10 according to exemplary embodiments of the present invention.

Referring to FIG. 5, when the display 120 is connected to the connector 110, the controller 150 identifies the display 120 at operation 500 and determines whether or not to adjust a resolution of the display 120 at operation 510. When it is determined that the resolution is to be adjusted (e.g., "YES" in operation 510), the controller 150 can change the resolution of the image to be displayed at operation 520. When it is determined that the resolution of the display 120 may not be adjusted (e.g., "NO" in operation 510), no separate operation for resolution adjustment may be performed by the controller 150. When the image having the changed resolution for resolution adjustment is displayed on a screen at operation 520, if a user selects a particular image (e.g., "YES" in operation 530), the controller 150 controls the selected image to be displayed based at a resolution of the selected image at operation 540. When there is no selection received (e.g., "NO" in operation 530) or the user does not want any selection, the controller 150 returns to the operation 520 when an image having a different resolution is displayed on the screen.

Although several exemplary embodiments of the present invention have been illustrated and described, it will be appreciated by those skilled in the art that changes may be made in these exemplary embodiments without departing from the principles of the present invention, the scope of which is defined in the appended claims.

## Claims

1. A computer system comprising:
a graphic unit to generate and output an image signal;
a communication interface to communicatively couple a display to display an image based on the image signal;
a user input unit to receive an input; and
a controller to determine whether to adjust the resolution of the display with the controller of the computer system, change the resolution of the image and display the changed resolution image on the display at least once, and receive an input to select the changed resolution image as a set resolution to display images on the display.

2. The computer system according to claim 1, wherein the controller successively changes at least one of a horizontal resolution and a vertical resolution of the image at a predetermined interval.

3. The computer system according to claim 1, wherein the controller independently changes the horizontal resolution and the vertical resolution of the image, displays the changed horizontal resolution and vertical resolution and adjusts at least one of the horizontal resolution and the vertical resolution and then the other.

4. The computer system according to claim 1, wherein the controller simultaneously changes the horizontal resolution and the vertical resolution of the image and displays the changed horizontal resolution and vertical resolution.

5. The computer system according to claim 1, wherein the controller receives display-related identification information from the display and identifies the display based on the identification information.

6. The computer system according to claim 5, further comprising:
a storage to store the identification information,
wherein the controller stores the resolution of the image selected by the user in the storage in association with the identification information.

7. The computer system according to claim 5, wherein the identification information includes EDID data.

8. The computer system according to claim 1, wherein the controller identifies the display based on at least one of resolution, clock, and image size of the display.

9. A method of displaying an image on a display that is communicatively coupled to a computer system, the method comprising:
determining whether to adjust the resolution of the display with a controller of the computer system;
changing the resolution of the image and displaying the changed resolution image on the display at least once; and
receiving an input to select the changed resolution image as a set resolution to display images on the display.

10. The method of claim 9, wherein the changing the resolution of the image includes changing at least one of the horizontal resolution and the vertical resolution.

11. The method of claim 10, wherein at least two images are displayed on the display having different horizontal resolutions or different vertical resolutions.

12. The method of claim 9, wherein the changing the resolution and the displaying of the changed resolution on the display are at predetermined time intervals.

13. The method of claim 9, further comprising:
identifying the display that is communicatively coupled to the computer system; and
storing the set resolution in a storage unit with information of the identified display.

14. The method of claim 9, wherein the determining comprises identifying the display based on at least one of resolution, clock, and image size of the display.
